# EUROPEAN PATENT SPECIFICATION

(11) **EP 1 046 646 B1**
(45) Date of publication and mention of the grant of the patent: **23.06.2004**
(21) Application number: 99107305.7
(22) Date of filing: 19.04.1999
(51) Int. Cl.: C07F 7/18

(54) **Bis-silyl tertiary amines**
Bis-Silyl-tertiäre Amines
Amines tertiaires bis-silylées

(43) Date of publication of application: 25.10.2000
(73) Proprietor: General Electric Company, Schenectady, New York 12345 (US)
(72) Inventor: Gunther, Michael Lee, Danbury, Connecticut, 06811 (US); Pohl, Eric Raymond, Mt. Kisco, New York 10549 (US)
(74) Representative: Wibbelmann, Jobst, Dr., Dipl.-Chem.

(56) References cited:
- US-A- 5 130 401
- CHEMICAL ABSTRACTS, vol. 56, no. 6, 19 March 1962 (1962-03-19) Columbus, Ohio, US; abstract no. 5993a, SHIINA, K. ET AL.: "reaction of silicon-containing amino compounds" XP002116469 & KOGYO KAGAKU ZASSHI, vol. 63, 1960, pages 173-175,
- CHEMICAL ABSTRACTS, vol. 55, no. 16, 7 August 1961 (1961-08-07) Columbus, Ohio, US; abstract no. 15341d, SHINA, K. ET AL.: "synthesis and reaction of silicon-containing amines" XP002116470 & MEM. FAC. ENG. OSAKA CITY UNIV., vol. 1, 1959, pages 1-13,

## Description

### Field of Invention

The present invention relates to novel structures of certain bis-silyl-tertiary amines and the manufacture and use thereof.

### Background of the Invention

Aminosilanes have many utilities in the coupling of inorganic material, e.g., silica, siliceous fillers, metal oxides and ceramics with organic materials, e.g., resins, in forming interpenetrating polymer networks with organic materials and in crosslinking organic and silicone materials. Most of these silanes include only a primary or secondary amino functionality. However, primary and secondary amine functionalities can be overly reactive in the end use formulation undergoing side reactions and lose efficacy over time.

Moreover, many secondary amines are synthesized by using mono, di or tri-alkoxy functional silanes. Thus, in aqueous solutions the utility can be compromised by the silanes forming polysiloxanes that are not desirable, e.g., stable cubic structures. These structures adhere poorly.
K. Shiena and M. Kumada disclose the synthesis and reaction of certain silicon-containing amines in MEM. FAC. ENG. OSAKA CITY UNIV., vol 1, pg 1-14, 1959 and KOGYO KAGAKU ZASSHI, vol 63173-175, 1960.

### Summary of the Invention

Bis-silyl tertiary amines according to claims 1-6 appended to the specification provide controlled reactivity and good adhesion.

### Detailed Description of the Invention Structure

In formula I above each R¹ is a monovalent radical, e.g., hydrogen, a silyl group, an imino group, a dialkyl amine, or, preferably a hydrocarbon functionality, including, but not limited to, aryl, allyl, cycloalkyl, alkyl (linear or branched) or aralkyl that may contain heteroatoms, e.g., oxygen, nitrogen or sulfur. R¹ could also be a silyl functionality or an acyl functionality (e.g., trimethoxysilyl, or acetyl). Examples of R¹ are -N=C(CH₃)₂, -Si(OCH₃)₃; and -CH=CHCH₃. Most preferably R¹ is an alkyl of 1 to 10 carbon atoms, e.g., methyl, ethyl, isopropyl, cyclohexyl, or t-butyl.

Y is a heteroatom selected from oxygen, nitrogen or sulfur. The value of b depends on the valency of Y, i.e., b=1 for Y = oxygen or sulfur, and b=2 for Y = nitrogen. Preferably Y is oxygen.

Preferably a is 3, but if a<3, each R² is a monovalent radical, including, but not limited to, a hydrocarbon radical, a saturated hydrocarbon, an unsaturated hydrocarbon or cyano. Preferably R² is a cycloalkyl, alkyl (linear or branched) or aralkyl, that may include heteroatoms, e.g., oxygen, nitrogen, or sulfur. Exemplary R² include, phenyl, phenylethyl, 3-oxobutyl or 2-methoxypropyl. Most preferably R² is methyl or ethyl.

R³ is a divalent bridging group, including, but not limited to an alkylene, alkarylene, arylene, or polyalkylene oxide, but preferably is a C₁-C₁₂ alkylene, e.g., propylene or butyléne, and may be branched, e.g., neopentylene, cyclic, e.g., dimethylene cyclohexane, or unsaturated, e.g., dimethylene cyclohexene. R³ may include a heteroatom substituents, e.g., R³ may include an amino group either in the backbone or pendant to the backbone. If R³ includes an amine functionality, each amine therein is a tertiary amine. Specific examples of R³ are propylene, n-butylene, phenylene, di(ethylene) ethyl amine, and polyoxyethylene.

X is a carbonyl containing monovalent radical, e.g., keto, ester, thioester or amide radical. Preferable embodiments of X may be expressed by the formula (II) (R⁴)_{b}ZC(=O)CH(Q)CH(Q)-. Z is CH₂, O, S or N (depending on whether X is a keto, ester, thioester or amide, respectively). Q is H, alkyl, aryl, alkaryl, or (R⁴)_{b}ZC(=O)-. R⁴is a hydrocarbon moiety of one to twenty carbon atoms that may contain heteroatoms, a hydrogen, a silyl, or an organic polymer, e.g., polyester, polyurethane, polyether, polysulfide or polyamide, that itself may contain one or more ZC(=O)CHQCHQN[R³SiR²₃₋ₐ(Y(R¹_{b})ₐ]₂ groups. R⁴ preferably is an alkyl (linear, cyclic or branched), aryl or alkaryl, and more preferably an alkyl of one to four carbon atoms. Q is preferably hydrogen. The value of b, as in Formula I, depends on the valency of Z, e.g., b=1 for Z = oxygen or sulfur, and b=2 for Z = nitrogen.

Specific examples of X include: (CH₃)₃COC(=O)CH₂CH₂-, CH₃OC(=O)CH(CH₃)CH₂-, (CH₃CH₂ )OC(=O)CH₂CH(CH₃)-, (CH₃)₂CHOC(=O)CH₂CH(C₆H₅)-, CH₃OC(=O)CH₂CH[C(=O)OCH₃]-, H₂C=CHOC(=O)CH₂CH₂-, C₆H₅OC(=O)CH₂CH₂-, C₆H₅CH₂OC(=O)CH₂CH₂-, CH₃C(=O)(CH₂CH₂O)₅C(=O)CH₂CH₂-, CH₃C(=O)OC₆H₄OC(=O)CH₂CH₂-, CH₃OC(=O)CH₂CH(CN)-, C₆H₁₁OC(=O)CH₂CH₂-, H₂NC(=O)CH₂CH₂-, (CH₃)₂NC(=O)CH₂CH₂-, (CH₃)₂CHNHC(=O)CH₂CH₂-, H₂C=CHCH₂NHC(=O)CH₂CH₂-, CH₃SC(=O)CH₂CH₂-, CH₃(CH₂)₃SC(=O)CH₂CH₂-, C₆H₅SC(=O)CH₂CH₂-, CH₃C(=O)CH₂CH₂-, C₆H₅C(=O)CH₂CH₂-, H₂C=CHCH₂C(=O)CH₂CH₂-, CF₃C(=O)CH₂CH₂-, [(CH₃O)₃Si(CH₂)₃]₂NCH₂CH₂C(=O)O[CH₂CH₂OC(=O)(CH₂)₄C(=O)O]₁₀C(=O)CH₂CH₂-
Specific examples of the bis(silyl) amines that are useful in the present invention include: [(CH₃O)₃Si(CH₂)₃]₂ NCH₂CH₂C(=O)OC(CH₃)₃, [(CH₃O)₃SiCH₂CH₂CH₂N(CH₂CH₂C(=O)NH₂)CH₂-]₂, [(CH₃)₂CH O)₃SiCH₂CH₂ C₆H₄]₂ NCH₂CH₂C(=O)CH₃, [(CH₃O)₃SiOSi(OCH₃)₂CH2CH2CH2N(CH₂CH₂C(=O)NH₂)CH₂-]₂, [(CH₃CH₂O)₂Si(CH₃)CH₂CH₂C(CH₃)₂CH₂]₂NCH₂CH₂C(=O)SCH₃, [(CH₃)₂C=NO)₃SiCH₂CH₂C(CH₃)₂CH₂]₂NCH₂CH₂C(=O)SCH₃, [(CH₃O)₃Si(CH₂)₃]₂NCH₂CH₂C(=O)O[CH₂CH₂OC(=O)(CH₂)₄C(=O)O]₁₀CH₂CH₂OC(=O)CH ₂CH₂N[(CH₂)₃Si(OCH₃)₃]₂.

### Method of Manufacture

The amines of the present invention are made by Michael addition reaction chemistry from the corresponding bis-silyl secondary amine and an α,β- unsaturated carbonyl compound including, but not limited to, ketones, esters, thioesters, amides and organic polymers that contain at least one α,β- unsaturated carbonyl groups, e.g., unsaturated polyesters, unsaturated polyamides or vinyl esters.

The α, β-unsaturated carbonyl containing compound, i.e., (R⁴)_{b}ZC(=O)CQ=CHQ wherein R⁴, Z, Q and b are as in formula (II) above.

Suitable ketones include alkyl vinyl ketones, allyl vinyl ketones, and phenyl vinyl ketones. Suitable esters include acrylate, methacrylate, crotonate, cinnimate, maleate, sorbate, itaconate and fumarate esters of methyl, ethyl, propyl, butyl, phenyl and benzyl. A preferred ester is t-butyl acrylate. The corresponding S or N containing compounds are useful as well. Organic polymers that contain α,β- unsaturated carbonyl functional groups including unsaturated polyesters that are made from condensation of diols with diacids of which some of the diacids contain α,β- unsaturated carbonyls, e.g., fumaric or maleic acid, vinyl esters, and acrylate capped polyethers, polyamides and polysufide polymers.

The bis-silyl amines for the Michael reaction are of the formula (III) [((R¹)_{b}Y)ₐ R²₃₋ₐ SiR³]₂ NH where R¹, R², R³, a, b, and Y are as in Formula I. Specific examples of these silanes are bis-(3-trimethoxysilylpropyl) amine, bis-(3-triethoxysitylpropyl) amine, N-(3-trimethoxysilylpropyl)-N-(4-trimethoxysilylphenyl) amine and bis(-3-triisopropoxysilylpropyl) amine. Such bis-silyl amines are avaiable under the tradename, SILQUEST® A-1 170, for bis-(3-trimethoxysilylpropyl) amine from Witco Corporation. Moreover, diamines may be used, wherein each amine would react with an acrylate. For example ((R¹)_{b}Y)ₐR²₃₋ₐ Si-(CH₂)ₙ-NH-(CH₂)ₙ-NH-(CH₂)ₙ-SiR²₃₋ₐ(Y(R¹_{b}))ₐ wherein each "n" is individually 1 to 10 may be used. Moreover, these amines may be made in the art as taught in U.S. Patent No. 4,526,996.

The Michael adduct reaction chemistry is known as disclosed in U.S. Patent No. 4,122,074. The reaction preferably is run at an excess of amine to avoid the presence of unreacted acrylates in the final product. The process may be run with a condensation catalyst. The reaction temperature is 65° to 140°C and reaction time is typically 6 to 100 hours. The resultant product may be distilled or filtered to purify same.

### Utility

The bis-silyl tertiary amines have no active hydrogen on the nitrogen and so may be used in any reaction system where primary and secondary amines otherwise would tend to undergo undesirable side reactions. The tertiary amine is, however, available as a catalyst to increase the rate of silane hydrolysis and crosslinking reactions and to catalyze the reactions of the silyl groups containing a hydrolyzable group or after hydrolysis, silanol groups, with inorganic materials. The bis-silanes have multiple hydrolyzable groups (e.g., alkoxy). The two silyl groups provide for multiple attachments to the inorganic surface of strong, stable bonds and form films with lower amounts of the non-bonding polysiloxanes, e.g. cubic structures. Exemplary applications include films, solvent and aqueous based coatings, adhesives, binders, primers, fiberglass sizes, downhole fine consolidation, foundry, paints and any other application wherein amino silanes have heretofore been used.

The amino silanes of the present invention may be combined with known additives, such as anti-static agents, organic polymers, silylated polymers, siloxanes, lubricants, pigments, fillers (fibrous and non-fibrous), inhibitors, emulsifiers, and other silanes.

### Examples

### Michael adduct of bis-(3-trimethoxysilylpropyl) amine and methyl acrylate

1. To a 3 L, 3-neck flask equipped with an addition funnel, Vigreux column, thermometer, gas inlet, magnetic stir bar and heating mantle were bis (3-trimethoxysilylpropyl) amine (901.3 g, 2.64 mol, 1.1 eq) and methanol (479.2 g). The flask was placed under a nitrogen atmosphere using house nitrogen and a bubbler line. The flask was warmed to 50°C and methyl acrylate (207g, 2.4 mol, 1.0 eq) was added over 1.5 hours via the addition funnel. After 2 days at room temperature, GC analysis showed no remaining methyl acrylate. Methanol was removed under reduced pressure (60°C, 0.1 mm Hg).

### Michael adduct of bis (3-trimethoxysilyl propyl) amine and t-butylacrylate

2. To a 2 liter, 3-neck flask equipped with Freidrich condenser, addition funnel, heating mantle, thermometer, PTFE coated stirbar and a gas inlet were charged bis (3-trimethoxysilyl propyl) amine (751.3 g, 2.2 mol, 1 eq) and methanol (402 g). The flask was upheated to 40°C and placed under a nitrogen atmosphere using house nitrogen and a bubbler line. *t*-butyl acrylate (253.8 g, 2.0 mol, 0.9 eq.) was added via the addition funnel over 40 minutes. Heat was increased to reflux and held for ca. 6 hours. Methanol was stripped at atmospheric pressure followed by stripping under high vacuum to remove last traces of methanol and acrylate. Product was filtered through a 0.1 µ Abestocel pad. GC-MS analysis indicated the Michael adduct as the major product (ca. 90%). The reaction was run with an excess of amine which accounts for the remaining 10% of the product. The product will be called Amine A.

### Michael adduct of bis (3-trimethoxysilylpropyl)amine and n-butylacrylate

3. To a 2 liter, 3-neck flask equipped with Freidrich condenser, addition funnel, heating mantle, thermometer, PTFE coated stirbar and a gas inlet was charged bis (3-trimethoxysilyl propyl) amine(751.3 g, 2.2 mol, 1 eq). Flask was upheated to 40°C and placed under a nitrogen atmosphere using a bubbler line. n-Butyl acrylate (253.8 g, 2.0 mol, 0.9 eq.) was added via the addition funnel over 25 minutes. Heat was increased to 50°C for 1 hour followed by 70°C for 4 hours. GC analysis indicated low conversion. The temperature was increased to 100°C for 42 hours, 120°C for 18 hours then 140°C for 42 hours. Lights were stripped under reduced pressure using a short path distillation head. Product was distilled using a falling film molecular still. Using refluxing 1-octonol as the heat source, crude product was fed into the still at 50 drops/minute at 0.3 mm Hg. GC-MS analysis indicated the Michael adduct as the major product (ca. 90%). The reaction was run with an excess of amine which accounts for the remaining 10% of the product.

### Preparation and Physical Testing (Solvent Resistance) of the Films

4. Acrylic polymers were evaluated using a styrene acrylic latex (SCX2500, S. C. Johnson & Son) containing 6% of a coalescent agent diethylene glycol monobutyl ether. The mixture (used for the control) was coated onto 4"x12" aluminum plates and cured at room temperature for 7 days. The film was evaluated using an ASTM D 4752-87 MEK rub test. The control film failed after 10 rubs. 3% of Amine A was added to the control mixture and coated onto an aluminum substrate. The film was cured under the same conditions as the control. The Amine A containing film failed after 24 rubs in the MEK rub test (240% increase over the control).

5. Urethane/acrylic hybrid polymers were evaluated using a urethane hybrid emulsion (Flexane 620, Air Products and Chemicals, Inc.). The neat emulsion, used for the control, was cast onto an aluminum plate and cured at 66°C for 15 min then at room temperature for 7 days. The film was evaluated using an isopropanol hammer rub (1 pound hammer). The control failed after 80 rubs. Flexane 620 containing 3% of Amine A was cast onto aluminum plates and cured under the same conditions as the control. The film failed after 340 isopropanol hammer rubs (425% increase over the control).

## Claims

1. An amine comprising:
[((R¹)_{b}Y)ₐR² ₃₋ₐSiR³]₂NX
wherein
R¹ and R² are each monovalent radicals;
R³ is a divalent linking group;
a is 1 to 3;
Y is oxygen, nitrogen or sulfur;
b is 1 or 2 depending upon the valency of Y; and
wherein X is (R⁴)_{b}ZC(=O)CH(Q)CH(Q)- wherein Z is CH₂, O, S or N; Q is H, alkyl, aryl, alkaryl, or C(=O)Z(R⁴)_{b} and R⁴ is a hydrocarbon moiety of one to twenty carbon atoms, hydrogen, a silyl group or an organic polymer; b is 1 or 2 depending upon the valency of 7.

2. An amine according to claim 1 wherein a = 3, Y is oxygen and R¹ is selected from the group consisting of: aryl, allyl, cycloalkyl, alkyl (linear or branched) or aralkyl.

3. An amine according to claim 1 wherein R² is selected from the group consisting of: a saturated hydrocarbon, an unsaturated hydrocarbon and cyano.

4. An amine according to claim 1 wherein R³ is a C₁-C₁₂ alkylene.

5. An amine according to claim 1 wherein R⁴ is selected from the group consisting of a hydrocarbon moiety of one to twenty carbon atoms, hydrogen, and a silyl group.

6. An amine according to claim 5 wherein Q is H and Z is O.

7. A process for producing amines according to anyone of claims 1 to 6 comprising reacting
(a) an α, β-unsaturated carbonyl compound of the formula (R⁴)_{b}ZC(=O)CQ=CHQ wherein Z is CH₂, O, S or N; Q is H, alkyl, aryl, alkaryl, or C(=O)Z(R⁴)_{b} and R⁴ is a hydrocarbon moiety of one to twenty carbon atoms, hydrogen, a silyl or an organic polymer; b is 1 or 2; and
(b) a bis(silyl)amine of the formula [((R¹)_{b}Y)ₐR²₃₋ₐSiR³]₂NH where R¹ and R² each are a monovalent radical; R³ is a divalent linking group; Y is oxygen, nitrogen and sulfur; b is 1 or 2; and a = 1 to 3.

8. A process according to claim 7 wherein a stoichiometric excess of amine is used.

## Patentansprüche

1. Amin, umfassend:
[((R¹)_{b}Y)ₐR² ₃₋ₐSiR³]₂NX
worin
R¹ und R² einwertige Reste sind;
R³ eine zweiwertige Verknüpfungsgruppe ist;
a für 1 bis 3 steht;
Y Sauerstoff, Stickstoff oder Schwefel ist;
b für 1 oder 2 steht, abhängig von der Valenz von Y; und
worin X für (R⁴)_{b}ZC(=O)CH(Q)CH(Q)- steht, worin Z für CH₂, O, S oder N steht; Q für H, Alkyl, Aryl, Alkaryl oder C(=O)Z(R⁴)_{b} steht und R⁴ eine Kohlenwasserstoff-Einheit mit einem bis zwanzig Kohlenstoffatomen, Wasserstoff, eine Silylgruppe oder ein organisches Polymer ist; b für 1 oder 2 steht, abhängig von der Valenz von Z.

2. Amin nach Anspruch 1, in dem a = 3, Y Sauerstoff ist und R¹ ausgewählt ist aus der Gruppe bestehend aus Aryl, Allyl, Cycloalkyl, Alkyl (linear oder verzweigt) oder Aralkyl.

3. Amin nach Anspruch 1, in dem R² ausgewählt ist aus der Gruppe bestehend aus einem gesättigten Kohlenwasserstoff, einem ungesättigten Kohlenwasserstoff und Cyano.

4. Amin nach Anspruch 1, in dem R³ ein (C₁-C₁₂)-Alkylen ist.

5. Amin nach Anspruch 1, in dem R⁴ ausgewählt ist aus der Gruppe bestehend aus einer Kohlenwasserstoff-Einheit mit einem bis zwanzig Kohlenstoffatomen, Wasserstoff und einer Silylgruppe.

6. Amin nach Anspruch 5, in dem Q für H steht und Z für O steht.

7. Verfahren zur Herstellung von Aminen nach irgendeinem der Ansprüche 1 bis 6, umfassend die Umsetzung
(a) einer α,β-ungesättigten Carbonylverbindung der Formel (R⁴)_{b}ZC(=O)CQ=CHQ, worin Z für CH₂, O, S oder N steht; Q für H, Alkyl, Aryl, Alkaryl oder C(=O)Z(R⁴)_{b} steht und R⁴ eine Kohlenwasserstoff-Einheit mit einem bis zwanzig Kohlenstoffatomen, Wasserstoff, ein Silyl oder ein organisches Polymer ist, b für 1 oder 2 steht; und
(b) eines Bis(silyl)amins der Formel (((R¹)_{b}Y)ₐR²₃₋ₐSiR³]₂NH, worin R¹ und R² jeweils ein einwertiger Rest sind; R³ eine zweiwertige Verknüpfungsgruppe ist; Y Sauerstoff, Stickstoff und Schwefel ist; b für 1 oder 2 steht; und a = 1 bis 3.

8. Verfahren nach Anspruch 7, in dem ein stöchiometrischer Überschuss von Amin verwendet wird.

## Revendications

1. Amine comprenant :
[((R¹)_{b}Y)ₐR² ₃₋ₐSiR³]₂NX
dans laquelle
R¹ et R² sont chacun des radicaux monovalents ;
R³ est un groupe de liaison divalent ;
a est 1, 2 ou 3 ;
Y est un oxygène, un azote ou du soufre ;
b est 1 ou 2 en fonction de la valence de Y ; et
dans laquelle X est (R⁴)_{b}ZC(=O)CH(Q)CH(Q)-, dans laquelle Z est CH₂, O, S ou N ; Q est H, un groupe alkyle, un groupe aryle, un groupe alkaryle, ou C(=O)Z(R⁴)_{b} et R⁴ est un résidu hydrocarboné de un à vingt atomes de carbone, un hydrogène, un groupe silyle ou un polymère organique, b est 1 ou 2 suivant la valence de Z.

2. Amine selon la revendication 1, dans laquelle a = 3, Y est un oxygène et R¹ est choisi dans le groupe comprenant les groupes : aryle, allyle, cycloalkyle, alkyle (linéaire ou ramifié) ou aralkyle.

3. Amine selon la revendication 1, dans laquelle R² est choisi dans le groupe comprenant un hydrocarbure saturé, un hydrocarbure insaturé et un groupe cyano.

4. Amine selon la revendication 1, dans laquelle R³ est un groupe alkylène en C₁-C₁₂.

5. Amine selon la revendication 1, dans laquelle R⁴ est choisi dans le groupe comprenant un résidu hydrocarboné de un à vingt atomes de carbone, un hydrogène, et un groupe silyle.

6. Amine selon la revendication 5, dans laquelle Q est H et Z est O.

7. Procédé pour fabriquer des amines selon l'une quelconque de revendications 1 à 6, comprenant la réaction
(a) d'un composé carbonyle α, β-insaturé de formule (R⁴)_{b}ZC (=O) CQ=CHQ dans laquelle Z est CH², O, S ou N ; Q est H, un groupe alkyle, un groupe aryle, un groupe alkaryle, ou C(=O)Z(R⁴)_{b} et R⁴ est un résidu hydrocarboné de un à vingt atomes de carbone, un hydrogène, un groupe silyle ou un polymère organique, b est 1 ou 2 ; et
(b) une bis (silyle) amine de formule [((R¹)_{b}Y)ₐR²₃₋ₐSiR³]₂NH dans laquelle R¹ et R² sont chacun un radical monovalent ; R³ est un groupe de liaison divalent ; Y est un oxygène, un azote ou du soufre ; b est 1 ou 2 ; et a est 1, 2 ou 3.

8. Procédé selon la revendication 7, dans laquelle un excès de la quantité stoechiométrique d'amine est utilisé.
